(19) Europäisches Patentamt
European Patent Office
Office européen des brevets

(11) Publication number: 0 019 716 B2

(12) **NEW EUROPEAN PATENT SPECIFICATION**

(45) Date of publication of the new patent specification: 04.04.90

(21) Application number: 80102124.7

(22) Date of filing: 21.04.80

(51) Int. Cl.$^5$: C 09 D 155/00, C 08 L 25/10, C 08 L 31/04 // D21H19/56 ,(C08L25/10, 33:02),(C08L31/04, 33:08, 33:02)

# (54) Aqueous polymeric dispersions and paper coating compositions.

(30) Priority: 27.04.79 US 34061

(43) Date of publication of application: 10.12.80 Bulletin 80/25

(45) Publication of the grant of the patent: 27.07.83 Bulletin 83/30

(45) Mention of the opposition decision: 04.04.90 Bulletin 90/14

(84) Designated Contracting States: DE FR GB IT NL

(56) References cited:
EP-B-0 014 914
DE-A-1 669 288
DE-A-2 302 044
DE-B-1 221 748
DE-B-1 264 945
DE-B-1 495 532
DE-B-1 546 316
DE-B-1 696 167
US-A-3 513 121
US-A-3 903 035

Vorläufige Arbeitsanleitung ACROSOL PR8135 BASF 1975
Sortimentübersicht Polymerdispersionen Teil I, ACRONAL-Marken, Firmenschrift der BASF, November 1976

(73) Proprietor: THE DOW CHEMICAL COMPANY
2030 Dow Center Abbott Road P.O. Box 1967
Midland Michigan 48640-1967 (US)

(72) Inventor: Ik, Lee Do
5109 Nakoma Drive
Midland Michigan (US)
Inventor: Dean, Harry Lawrence
3810 Devonshire
Midland Michigan (US)
Inventor: Duane, Morris Jack
4202 Woodlawn
Midland Michigan (US)

(74) Representative: Hann, Michael, Dr.
Patentanwälte Dr. Michael Hann Dr. H.-G. Sternagel Sander Aue 30
D-5060 Bergisch Gladbach 2 (DE)

EP 0019716 B2

Courier Press, Leamington Spa, England.

**Description**

Paper products are often coated with pigmented compositions to modify such characteristics as surface smoothness, gloss, printability, ink receptivity, stiffness, opacity, etc. In such coating operations, an aqueous composition containing an adhesive component (commonly called a binder) and a pigment is applied to one or both surfaces of the paper substrate by various techniques.

Many different types of binder components have been suggested in the prior art including natural materials such as starch, casein, soy bean protein; synthetic polymeric materials such as emulsions or latexes of carboxylated styrene/butadiene copolymers, latexes of copolymers of esters of acrylic and/or methacrylic acid, aqueous solutions of certain water- or alkali-soluble synthetic polymers; and combinations thereof. However, such prior art binders typically suffer from one or more deficiencies in properties to the handling and ease of application such as mechanical and/or storage stability, or unacceptably high viscosity; or in properties relating to the desirable characteristics of the coated paper such as coating hold-out, fiber coverage, coating smoothness and gloss, stiffness, printability, ink receptivity, pigment binding strength, or glueability. Such deficiencies are particularly pronounced with the increasingly lightweight coated papers employed for rotogravure printing applications.

US—A—3 903 035 refers to pigmented paper coating compositions comprising a mixture of alkali-soluble and alkali-insoluble polymer latices. The alkali-soluble polymer component of this coating composition is an emulsion copolymer of 10 to 77 weight percent butadiene, 20 to 55 weight percent methacrylic acid and 3 to 35 weight percent half esters of a polymerizable dicarboxylic acid.

Improved binder and coating compositions have been developed which comprise an aqueous polymeric disperson containing

(A) from 10 to 60 weight percent based upon the total dispersion weight of an alkali-insoluble polymer having a glass transition temperature of not more than 50°C, said alkali-insoluble polymer being a synthetic addition polymer comprising in polymerised form, and based upon the weight of alkali-insoluble polymer

(1) from 30 to 75 percent of monovinylidene aromatic monomer,

(2) at least 25 percent of an aliphatic conjugated diene to make up 100 percent total with (1) and (3) and

(3) from 1 to 10 percent itaconic acid, fumaric acid or maleic acid, and

(B) from 0.5 to 25 weight percent based upon the alkali-insoluble polymer (A) of an alkali-soluble synthetic addition polymer comprising in polymerised form based upon the weight of alkali-soluble polymer

(1) from 50 to 85 percent of a vinyl ester of a non-addition polymerisable carboxylic acid,

(2) from 5 to 45 percent of the nitrile or $C_1$—$C_8$ alkyl ester of monoethylenically unsaturated carboxylic acid, and

(3) from 5 to 13 percent of a monoethylenically unsaturated carboxylic acid.

Also provided are improved aqueous coating compositions which comprise the improved aqueous polymeric binder and a pigment as well as improved coated paper products comprising a paper substrate (or sheet) carrying a dried coating of the improved coating compositions on at least one surface.

The aqueous polymeric dispersions of the invention — referred to interchangeably as latexes — have adequate mechanical and storage stability and are readily prepared from available monomers.

The paper coating compositions of the invention provide acceptable water retention for high-speed paper coating operations. Moreover, they provide the desired combination of coating composition and ultimate coating properties without requiring the use of auxiliary ingredients such as casein, or protein, typically employed in conventional coating compositions.

In addition, paper coated with these coating compositions exhibit a desirable combination of properties even at relatively low coating weights. They have excellent coating hold-out, smoothness and fiber coverage as well as good coating porosity, ink receptivity, printability, glueability and pigment binding strength even at coating weights as low as about 9 gm/m$^2$ on a dry basis per side coated. Such compositions are exceptionally well suited for lightweight coated paper of the type employed by the European rotogravure printing industry.

A. Alkali-insoluble component

The aqueous polymeric dispersions or latexes of the present invention contain a major proportion on a dry, polymer solids, weight basis of dispersed colloidal particles of the alkali-insoluble polymer which is substantially insoluble in neutral and acidic aqueous medium as well as in alkaline aqueous medium (i.e., an aqueous solution having a pH of greater than 7.0). In addition, the dispersed polymer particles must coalesce upon drying to form a continuous, adherent film at ambient temperature and pressure or other conditions selected to dry or finish the coated products. Such polymers include alkali-insoluble polymers which have a glass transition of less than 50°C, preferably 25°C or less and are conventionally employed as the film-forming binder or adhesive component in other coating compositions.

Thus, for example, polymers which are particularly useful include alkali-insoluble synthetic addition polymers comprising in polymerized form based upon the weight of alkali-insoluble polymer

(1) from 30 to 75 percent (preferably 30 to 60 percent) monovinylidene aromatic monomer;

(2) at least 25 percent to make up 100 percent with (1) and (3) (preferably 40 to 60 percent) of an aliphatic conjugated diene monomer;

(3) from 1 to 10 percent and preferably 1 to 5 percent of monoethylenically unsaturated carboxylic acid; and

(4) from 0 to 20 percent (preferably 1 to 20 percent) of nitrile. $C_1$—$C_8$ alkyl ester or $C_2$—$C_4$ hydroxyalkyl ester of a monoethylenically unsaturated carboxylic acid (especially 1 to 10, and most preferably 1 to 5, percent of a $C_2$—$C_4$ hydroxylalkyl ester of a monoethylenically unsaturated carboxylic acid).

Monovinylidene aromatic monomers useful in the alkali-insoluble polymers include monomers where a radical of the formula:

$$CH_2=\overset{\overset{R}{|}}{C}-$$

where R is hydrogen or a lower ($C_1$—$C_4$) alkyl is attached directly to a $C_6$—$C_{10}$ aromatic nucleus optionally substituted with alkyl or halogen groups. Typical of aromatic monomers are styrene, α-methylstyrene, ortho-, meta- and para-methylstyrene, ortho-, meta- and para-ethylstyrene, o,p-dimethylstyrene, o,p-diethylstyrene, isopropylstyrene, o-methyl-p-isopropylstyrene, p-chlorostyrene, p-bromostyrene, o,p-dichlorostyrene, o,p-dibromostyrene, vinylnaphthalene, vinylalkylnaphthalenes and vinylhalonaphthalenes and comonomeric mixtures thereof. Styrene and vinyltoluene are preferred as the monovinylidene aromatic monomers.

Aliphatic conjugated diene monomers useful in the alkali-insoluble polymers are those conventionally employed in such polymers. Typically, such aliphatic conjugated dienes contain 4 to 9 carbon atoms and include 1,3-butadiene, 2-methyl-1,3-butadiene, 2,3-dimethyl-1,3-butadiene, pentadiene, 2-neopentyl-1,3-butadiene; substituted 1,3-butadienes such as 2-chloro-1,3-butadiene, and 2-cyano-1,3-butadiene; and other straight and branched chain conjugated dienes and comonomeric mixtures thereof. The 1,3-butadiene hydrocarbon monomers provide particularly desirable properties and are therefore preferred with 1,3-butadiene most preferred.

Other monomers suitable for use in the alkali-insoluble polymers include the nitriles, the alkyl esters (typically $C_1$ to $C_8$ alkyl esters) and the hydroxyalkyl esters (typically $C_2$—$C_4$ hydroxyalkyl esters) of monoethylenically unsaturated carboxylic acids as well as the monoethylenically unsaturated carboxylic acids themselves. The particular monoethylenically unsaturated carboxylic acid is not critical so long as the acid or its nitrile or ester derivative is copolymerizable with the other monomers. Examples of suitable $C_3$—$C_{10}$ acid monomers include Itaconic acid, acrylic acid, methacrylic acid, fumaric acid, maleic acid, vinylbenzoic acid and isopropenylbenzoic acid. Preferred are acrylic acid, methacrylic acid, itaconic acid, fumaric acid and maleic acid. Comonomeric acid mixtures can be employed if desired. When the acids themselves are employed, they can be introduced as such or be formed in situ from a hydrolyzable derivative such as a salt or anhydride.

Suitable derivatives of the monoethylenically unsaturated carboxylic acids include nitriles such as acrylonitrile and methacrylonitrile; $C_2$ to $C_4$ hydroxyalkyl esters such as 2-hydroxyethyl acrylate, 3-hydroxypropyl acrylate; $C_1$ to $C_8$ alkyl esters such as methyl acrylate, methyl methacrylate, ethyl acrylate, ethyl methacrylate, 2-chloroethyl methacrylate, propyl acrylate or methacrylate, n-butyl methacrylate, and 2-ethylhexyl acrylate.

In a preferred embodiment of the invention the alkali-insoluble polymer component (A) is a copolymer of:

(1) 30 to 70 weight percent styrene,

(2) at least 25 weight percent to amke up 100 percent with (1) and (3) 1,3-butadiene, and

(3) 1 to 5 weight percent of itaconic, fumaric or maleic acid, and the alkali-soluble polymer component (B) is a copolymer of:

(1) 50 to 85 weight percent vinyl acetate,

(2) 5 to 45 weight percent ethyl acrylate, and

(3) 5 to 13 weight percent methacrylic acid having a 3 weight percent aqueous solution Brookfield viscosity of 0.01 to 12.0 Pa.s. (10 to 1200 cps) at pH 9.20 rpm and 25°C

The alkali-insoluble polymers are employed in the aqueous polymeric dispersions of the invention in a major proportion relative to the alkali-soluble polymer, both being taken on a dry polymer solids weight basis. The amount of film-forming alkali-insoluble polymer relative to the total wet weight of the dispersion is not particularly critical. However, generally such alkali-insoluble polymer consistutes from 10 to 60 (preferably 20 to 60 and most preferably 40 to 60) weight percent of the total aqueous dispersion

The alkali-insoluble polymers employed in the practice of the invention are already known in the art. They can be conveniently prepared by conventional emulsion polymerization procedures. The solids content of the resulting dispersion or latex can be adjusted as desired by usual means. Similarly, conventional additives, such as, for example, surfactants, bacteriocides, neutralizers, antifoamers, can also be added to such latexes in the normal manner.

B. Alkali-soluble component

The second essential polymeric component ingredient of the aqueous polymeric dispersons is a synthetic addition polymer which is alkali-soluble. As used herein, the term "alkali-soluble" means that the polymer is at a 3 weight percent concentration at 25°C in alkaline aqueous medium to give an essentially transparent or translucent solution as distinguished from a dispersion characterised by a typical white, milky appearance.

Preferably, the alkali-soluble polymer is insoluble in aqueous acid but is soluble in aqueous media having a pH 7 or above and comprises in polymerized form the monomers as stated in Claim 1.

Suitable vinyl esters are those which do not impart substantial cross-linking to the resulting polymer and thus reduce the desired alkali solubility. Accordingly, the vinyl ester monomer typically employed contain a non-polymerizable acid component. Examples of such viny esters include those of aromatic and saturated aliphatic carboxylic acids, particularly $C_2$—$C_8$ carboxylic acids. Typical vinyl esters include vinyl acetate, vinyl propionate, vinyl butyrate, vinyl 2-ethylhexoate, and vinyl benzoate. The less expensive and readily available vinyl acetate and vinyl propionate are especially desirable.

The amount of vinyl ester monomer employed in the alkali-soluble polymer can vary somewhat. However, it is important that the amount be least 50 but not more than 85 weight percent of the alkali-soluble polymer. At lower levels the coating holdout and fiber coverage of the ultimate paper coating composition will generally be detrimentally affected and at higher levels the preparation of the desired polymers becomes more difficult. Most preferably from 60 to 85 weight percent of the vinyl ester is employed based upon the total weight of alkali soluble polymer.

Suitable nitrile and ester monomers for the alkali-soluble polymeric component of the present invention include nitriles, and $C_1$—$C_8$ alkyl esters of the addition polymerizable monoethylenically unsaturated carboxylic acids desribed above in conjunction with the alkali-insoluble polymeric component.

The amount of the nitrile or ester monomers employed in the alkali-soluble polymers of the invention is not particularly critical so long as the resulting polymer is alkali-soluble but substantially insoluble in acidic aqueous medium. Generally from 5 to 45 (preferably 5 to 40) weight percent of those monomers can be employed in the alkali-soluble polymers.

The third monomer employed in the alkali-soluble polymers is a monoethylenically unsaturated carboxylic acid which is addition copolymerizable with the other monomers. Comonomeric mixture of such carboxylic acids can be employed. Preferably, such carboxylic acid monomer is a monobasic, monoethylenically unsaturated $C_3$—$C_{10}$ carboxylic acid such as, acrylic aicd, methacrylic acid, crotonic acid, haloacrylic acid (e.g. 2-chloroacrylic acid, 2-bromoacrylic acid, 3-chloroacrylic acid, 2,3-dichloroacrylic acid, 3,3-dichloroacrylic acid), 2-phenylacrylic acid, 3-phenylacrylic acid, vinylbenzoic acid, isopropenylbenzoic acid. However, monoethylenically unsaturated dibasic carboxylic acids such as fumaric acid, itaconic acid, or maleic acid, can also be beneficially employed, particularly in combination with a monobasic carboxylic acid monomer. Preferred monomers are those having from 3 to 5 carbon atoms, most preferably acrylic or methacrylic acid.

The amount of unsaturated carboxylic acid monomers employed in the alkali-soluble polymer component is not particularly critical so long as it is sufficient to impart the requisite alkali solubility without detrimentally affecting the desired properties (e.g. coating holdout, coating smoothness and fiber coverage) of the ultimate paper coating compositions and products. However, from 5 to 13 and especially 7 to 13 weight perent of such monoethylenically $C_3$—$C_{10}$ unsaturated carboxylic acid monomers generally are employed in the alkali-soluble polymers.

In addition the alkali-soluble polymers can also optionally contain a relatively small amount (e.g., from 0 to 20 weight percent based upon the alkali-soluble polymer) of one or more other comonomers. Examples include amides of the ethylenically unsaturated carboxylic acids such as acrylamide or methacrylamide as well as the monovinylidene aromatic monomers the aliphatic conjugated dienes described in conjunction with the alkali-insoluble polymer component. The amount of such optional types of monomers employed in the alkali-soluble polymers is not particularly critical so long as the above-noted required monomers are employed within the specified ranges thereof. Preferably, however, the amount of any hydrophilic opitonal monomer such as acrylamide is limited such that the resulting alkali-soluble polymer is not substantially soluble in acidic or neutral aqueous medium. Similarly, the amount of any hydrophobic optional monomers which is employed such as styrene or 1,3-butadiene are limited such that the requisite alkali-solubility of the polymer is not substantially impaired. Thus, while total amounts of optional monomers in the range of 0 to 20 weight percent of the alkali-soluble polymer can typically be employed it is generally preferable to limit such optional monomers to 0 to 10 weight percent based upon weight of alkali-soluble polymer.

The molecular weight of the alkali-soluble polymers is not particularly critical. However, it has been found that the alkali-soluble polymers of very low molecular weight (i.e., those exhibiting a Brookfield viscosity of less than 0.01 Pa.s (10 cps) to 20 rpm in 3 weight percent alkaline aqueous solution at a pH of 9 at 25°C) are less desirable than the alkali-soluble polymers having relatively higher molecular weight, particularly when the low molecular weight polymers contain 10 percent or more of the carboxylic acid monomer. Accordingly, alkali-soluble polymers having a molecular weight such that a 3 weight percent solids aqueous solution thereof at pH 9 has a Brookfield viscosity of about 25°C of at least 0.01 Pa.S (10 cps) or more, especially 0.01 to 12.0 Pa.S (10 to 1200 cps), at 20 rpm are preferred for use in the pigmented paper

coating composition (i.e., coating colors) of the invention. The lower molecular weight polymers are generally more beneficially used as water retention agents, thickeners, dispersants and stabilizers for various types of aqueous colloidal dispersions.

As noted the alkali-soluble polymer component (B) is employed in the aqueous polymeric dispersions of the present invention in a minor proportion relative to the amount of the alkali-soluble polymer component (A) both polymeric components being taken on a dry polymer solids weight basis. The precise ratio of such polymeric components in the dispersions of the invention is not particularly critical so long as the alkali-soluble polymer is employed in an amount sufficient to provide the desired combination of properties such as coating holdout, fiber coverage, coating smoothness and water retention for the paper coating compositions and/or the ultimate paper coatings prepared therefrom. However, as a general rule, the alkali-soluble polymeric component is employed in an amount ranging from 0.5 to 25 (preferably 1 to 20) weight percent based upon the weight of the alkali-insoluble polymer. Within this range, the exact proportion of the alkali-soluble polymer will depend upon the particular combination of properties desired for the paper coating composition and the ultimate coated paper product. For example, from the standpoint of water retention and high speed blade runability, it is generally advantageous to employ the alkali-soluble polymer component at a level sufficient to provide 0.3 to 1.5 parts by weight of the alkali-soluble polymer solids per 100 parts by weight of pigment solids in the ultimate paper coating compositions. Accordingly, when the desired paper coating compositions have a relatively low binder to pigment ratio such as 3 to 10 parts binder to 100 parts pigment on a dry weight basis, it is generally advantageous — in terms of water retention and blade runability — that the alkali-soluble polymer be employed at a polymer solids level of 10 to 25 weight percent based upon the polymer solids of the alkali-insoluble polymer in the aqueous polymer dispersion. Similarly, when the ultimate paper coating composition has a relatively high binder to pigment ratio, on the order of 10 to 30 parts binder solids per 100 parts of pigment solids, then the use of somewhat lower levels of the alkali-soluble polymer component from 1 to 15 and especially 1 to 5 weight percent based upon the polymer solids of the alkali-insoluble polymer, is generally desirable. On the other hand, if coating holdout, fiber coverage and coating smoothness are of primary interest then it is generally advantageous that the alkali-soluble polymer constitutes from 0.5 to 15 (preferably from 1 to 10 and most preferably 1 to 6) weight percent of the total polymer solids.

The alkali-soluble polymers are prepared by emulsion polymerization of the desired monomers by conventional emulsion polymerization techniques in an acidic aqueous medium. For example, the monomers are dispersed in an acidic aqueous medium with agitation using 0.5 to 5 weight percent based upon monomer of conventional anionic and/or nonionic emulsifiers such as potassium n-dodecyl sulfonate, sodium isooctylbenzene sulfonate, sodium laurate, or nonylphenol ethers of polyethylene glycols and thereafter the dispersion is polymerized.

Conventional polymerization catalysts can be employed including peroxides, persulfates, and azo compounds such as sodium persulfate, potassium persulfate, ammonium persulfate, hydrogen peroxide t-butyl hydroperoxide, cumene hydroperoxide, azodiisobutyric diamide as well as redox catalysts activated in the water phase by a water-soluble reducing agent. Typically, such catalysts are employed in an amount ranging from 0.01 to 5 weight percent based upon the monomer weight. Polymerization temperatures in the range of 50 to 110°C (preferably from 70 to 90°C) are generally employed.

Conventional chain transfer agents can be employed to regulate the molecular weight of the polymers. Examples include n-dodecyl mercaptan, bromoform, and carbon tetrachloride, generally in amounts ranging from 0.01 to 5 (especially 0.1 to 1) weight percent based upon the weight of the monomers employed. Indeed, it is preferable that such transfer agents (particularly bromoform in amounts from 0.1 to 1, especially 0.1 to 0.5, weight percent) be employed in the preparation of the alkali-soluble polymeric components.

The solids content of the alkali-soluble latex can be adjusted following polymerization by standard means. Generally, the desired level of polymeric solids content of the alkali-soluble latex is 15 to 50 (preferably 25 to 40) weight percent on a total weight basis and is typically obtainable directly from the polymerization process.

It is sometimes desirable to have small amounts of known additives incorporated in the alkali-soluble latex. Typical examples of such optional additives include surfactants, bacteriocides (e.g., formaldehyde), neutralizers, antifoamers.

Mixing of the alkali-soluble and alkali-insoluble latex components to form the desired aqueous polymeric dispersions is not critical and can be accomplished in any convenient fashion. For example, the two components can be blended together in a latex form to provide an acidic aqueous polymeric dispersion where both polymeric components are dispersed as discrete polymeric particles in an acidic aqueous medium. Alternatively, the acidic latex of alkali-soluble polymer can first be converted to an aqueous alkali solution of the polymer and thereafter be admixed with the alkali-soluble latex to form an alkaline aqueous polymeric dispersion where only the alkali-insoluble polymer is present in the form of discrete, dispersed polymer particles and the alkali-soluble polymer component is dissolved in the alkaline medium. Similarly, this latter alkaline dispersion can be conveniently prepared by first preparing an acidic blend of the alkali-soluble and alkali-insoluble latexes and thereafter adding base to adjust the pH in to the alkaline range and thereby solubulize the alkali-soluble polymer.

Since the alkaline aqueous dispersions typically have higher viscosity than their acidic counterparts by

virtue of the solubilization of the alkali-soluble polymer, subsequent mixing operations become more difficult. Accordingly, the acidic versions of the aqueous polymeric dispersions of the invention are generally preferred, particularly where such dispersions are intended for ulitmate use as binder components for pigmented or filled coating compositions.

The coating compositions of the present invention comprise a pigment and an adhesive component or binder in the usual ratios. However, they differ from the prior art by virtue of employing the novel aqueous polymeric dispersions as the binder component. The resulting new coating compositions are particularly useful as coating colors for paper coating applications. The term "coating color" is often applied in the art to such pigmented paper coating compositions.

In the coating colors of the present invention, the adhesive and pigment are mixed in such proportions of 3 to 30 (preferably 4 to 25) parts by weight, dry basis, of adhesive per 100 parts by weight of dry pigment. The aqueous polymeric dispersions can be the sole adhesive employed in the coating color or other adhesives known in the art such as casein, protein, starch, can be used in conjunction. Generally from 20 to 100 percent, perferably 50 to 100 percent, and most preferably 70 to 100 percent, by weight of the adhesive in a coating color of this invention is the aqueous polymeric dispersion described herein.

The total solids content of the coating color usually ranges from 40 to 70 percent (preferably 40 to 65 percent) by weight based upon the total coating color weight with 40 to 55 weight percent typical in air knife coating operations and 55 to 65 weight percent solids typical in blade coating applications.

Pigments which can be employed include known mineral pigments, plastic pigments and mixtures thereof. Examples of suitable mineral pigments include finely divided clays (especially of the kaolin type), calcium carbonate, titanium dioxide, satin white. Other materials such as talc, blanc fixe, ochre, carbon black, aluminium powder or platelets and other pigmentary or filler material can be employed in minor amounts in conjunction with mineral pigments.

Plastic pigments suitable for use include those known to be useful in plastic pigmented paper coatings, such as those described in U.S. Patent 3,949,138. Such plastic pigments are generally characterized as plastic, polymeric particles which have a number average particle diameter of 0.3 to 0.8 micrometer and are not film forming at temperatures and pressures selected to dry or finish the coated paper. By "non-film forming" it is meant that the plastic particles do not coalesce to form a film under normal conditions selected to dry or finish the coated article. Other plastic pigments suitable for use include those described in U.S. Patents 3,293,144 and 3,988,522.

The coating colors of the invention can optionally contain other additives such as thickeners, water retention agents (e.g., alginic acid or carboxymethyl-cellulose) and curing agents (e.g., melamine formaldehyde resins, urea formaldehyde resins and glyoxal) to achieve specific coating properties. When thickeners and/or curing agents are employed, they generally constitute, individually, from 1 to 5 percent of the total binder weight on a dry weight basis.

The components can be combined to form the coating colors of the invention in any convenient manner. As a general rule, it is preferred to first disperse the pigment and other powdery components in water and thereafter admix such pigment dispersion with the other coating color ingredients. Additionally, it is preferred to admix all of the binder ingredients together before combining them with the pigment dispersion.

Thus, in the preparation of the coating colors of this invention, it is preferred to (a) admix the acidic aqueous polymeric dispersion of alkali-insoluble and alkali-soluble polymeric components with any other desired binder components; (b) thereafter add an aqueous dispersion of the desired pigment components, and then (c) adjust the pH of the resulting coating color of a pH value of 7 to 13, especially a value of 7.5 to 10, before application to the desired substrate.

Other methods of combining the above-described coating color ingredients can also be employed. For example, a coating color containing all of the ingredients except the alkali-soluble polymer component can be prepared and then the alkali-soluble polymer added. In this method, the alkali-soluble polymer is preferably admixed as an acidic aqueous dispersion and then the pH is adjusted to solubilize the polymer before application as a coating color.

The coating color can be applied to paper in conventional amounts typically from 3 to 30, and preferably 7 to 15 grams per square meter ($g/m^2$) of coated surface on a dry solids basis by conventional means such as letter-press print roll coater, offset roll coater, size press, air knife, blade coater. However, the coating colors of the invention are of particular benefit in the preparation of lightweight coated papers for rotogravure printing applications using blade and air knife coating methods to apply 15 $gm/^2$ or less per side of coated surface area or 30 $g/m^2$ or less for paper coated on both sides.

After application, the coating is dried by any convenient method. In high speed operations, drying is accomplished by brief contact with a current of air at a velocity of up to 10,000 feet per minute and heated to a temperature up to 320°C. The duration of contact is such that the coating is not heated above 100°C nor above the glass transition temperature of any plastic pigment which may be optionally employed in the coating colors. After drying, the coated paper product can be finished by conventional processes such as gloss calendering and super calendering. The resulting coatings exhibit good adhesion to paper and other solid substrates. They can be printed in a conventional manner and are particularly well suited for rotogravure printing.

The present invention is further illustrated by the following examples in which all parts and percentages are on a weight basis unless otherwise specified.

Examples 1—2

Aqueous polymeric disperions and coating colors of the invention and coated papers made therewith

A. A series of two alkali-soluble polymer latexes (Latexes A—C) was prepared by emulsion polymerizing vinyl acetate, ethyl acrylate and methacrylic acid in the proportions indicated in Table 1. In each instance, the mnomer charge including the bromoform was continuously added at a constant rate over a four-hour period to a stirred mixture of 190 parts per 100 parts of monomer) of an aqueous medium containing about 0.1 weight percent of sodium dodecyldiphenyl ether disulfonate and 0.07 weight percent of the pentasodium salt of diethylenetriaminepentaacetic acid held at 80°C. Concurrently, an aqueous stream containing 56 parts deionized water, 1.8 parts sodium dodecyldiphenyl ether disulfonate, 0.4 part sodium persulfate and 0.4 part sodium bicarbonate (per 100 parts monomer) is also added at a constant rate over the same time. Polymerization occurs at 80°C during the course of the addition with a final one-hour "cookdown" at 80°C to achieve at least a 90 percent conersion of monomer to polymer.

The resulting alkali-soluble latexes were analyzed for solids content; 3 percent polymer solution viscosity at pH 9 and 25°C; the amount of a 10 percent aqueous sodium hydroxide required to adjust a sample containing 9 grams of polymer solids to a pH value of 9; and the relative clarity immediately upon such pH adjustment. The results are summarized in Table 1 along with corresponding results for a comparative control alkali-soluble latex C-1 prepared in the same manner as Examples 1—2 except for a lower vinyl acetate and higher methacrylic acid content.

TABLE 1

Alkali-soluble latex compositions of Examples 1—4

| | Alkali-soluble polymer | | |
|---|---|---|---|
| Monomers | A | C | C-1° |
| Vinyl Acetate | 63.3 | 63.3 | 25 |
| Ethyl Acrylate | 31.7 | 26.7 | 50 |
| Methacrylic Acid | 5.0 | 10.0 | 25 |
| Bromoform | 0.25 | 0.25 | 0.25 |
| % Solids | 28.3 | 29.2 | 31.1 |
| pH of latex | 4.0 | 3.7 | 4.0 |
| 3% Soln. Visc. pH 9 | 8.5 cps | 165 cps | 70 cps |
| g 10% NaOH[1] | 2.3 | 4.4 | 10.5 |
| Clarity | v. opaque | sl. haze | v. opaque |

*Not an example of the invention.

[1]Amount of 10% NaOH required to adjust latex sample 9 g polymer solids to a pH of 9.

B. The alkali-soluble latexes were admixed in various proportions with a carboxylated styrene/butadiene copolymer latex (i.e., 47/50/3 weight ratio styrene/butadiene/itaconic acid copolymer latex) to form the corresponding latex blend of alkali-soluble and alkali-insoluble polymers. Such latex blends were then admixed with a pigment (i.e., Dinkie "A" clay) in an amount of 5.5 parts of combined alkali-soluble and alkali-insoluble polymer solids per 100 parts of clay to form a coating color containing 40 percent total solids. Thereafter, the pH of the coating colors were adjusted to 9 with 10 per cent aqueous sodium hydroxide.

To measure the coating holdout, samples of the coating colors were applied to the surface of a standard black paper using a Meyer rod. Then the brightness value of the coated paper was determined using a Gardner Multipurpose Reflectometer. Higher brightness values reflect better coating or hiding of the black paper substrate. The results of such tests are summarized in Tables 2 and 3.

TABLE 2
Black paper hiding test

| | Example 1 (Latex A) | | Control #1* (Latex C-1) | |
|---|---|---|---|---|
| Blend ratio[1] | Coating weight[2] | Brightness | Coating weight[2] | Brightness |
| 30:1 | 10.1 (15.2) | 54.8 | 9.9 (14.9) | 52.0 |
| 20:1 | 10.7 (16.1) | 56.2 | 8.8 (13.2) | 52.1 |
| 15:1 | 11.3 (17.0) | 56.8 | 8.7 (13.1) | 52.1 |
| 11:1 | 9.7 (14.6) | 55.3 | 9.2 (13.8) | 53.2 |
| 5:1 | 9.7 (14.6) | 54.8 | 9.0 (13.5) | 54.2 |

*Not an example of the invention.
[1]Weight ratio of alkali-insoluble latex to alkali-soluble latex on a dry polymer solids basis.
[2]Pounds per ream ($g/m^2$) using a #8 Meyer Rod with a 40 weight percent total solids coating color.

TABLE 3
Black paper hiding test

| | Example 2 (Latex C) | | Control #2* (Latex C-1) | |
|---|---|---|---|---|
| Blend ratio[1] | Coating weight[2] | Brightness | Coating weight[2] | Brightness |
| 30:1 | 6.8[3] (10.2) | 51.1 | 6.6[3] (9.9) | 47.4 |
| | 8.8[4] (13.2) | 55.6 | 7.1[4] ((10.7) | 50.5 |
| 20:1 | 6.9[3] (10.4) | 50.7 | 5.9[3] (8.9) | 45.7 |
| | 7.9[4] (11.9) | 55.2 | 7.9[4] (11.9) | 50.6 |
| 15:1 | 7.1[3] (10.7) | 53.1 | 6.4[3] (9.6) | 45.5 |
| | 7.8[4] (11.7) | 55.7 | 7.8[4] (11.7) | 50.8 |
| 11:1 | 6.8[3] (10.2) | 50.0 | 7.0[3] (10.5) | 46.6 |
| | 8.4[4] (12.6) | 54.0 | 7.6[4] (11.4) | 51.1 |
| 5:1 | 7.5[3] (11.3) | 50.6 | 6.8[3] (10.2) | 49.2 |
| | 8.7[4] (13.1) | 55.4 | 7.5[4] (11.3) | 53.0 |

*Not an example of the invention.
[1]Weight ratio of alkali-insoluble latex to alkali-soluble latex on a dry weight basis.
[2]Pounds per ream ($g/m^2$).
[3]Coating weight obtained with #4 Meyer Rod.
[4]Coating weight obtained with #6 Meyer Rod.

From the Black Paper Hiding Test results of Tables 2 and 3 it is apparent that the coating colors employing the alkali-soluble latexes of the invention provide notably higher brightness readings than do the corresponding coating color controls employing the comparative Latex C-1, thereby indicating improved coating efficiency.

Examples 3—4

A. The alkali-soluble Latexes A—C and Comparative Latex C-1 of Examples 1—2 were blended with the alkali-soluble latex as described in Examples 1—2 in the different proportions indicated in Table 4 below. Each of the resulting latex blends were then admixed with a 70 percent solids aqueous dispersion of Dinkie "A" clay (in a ratio of 5.5 parts combined alkali-insoluble and alkali-soluble polymer solids per 100 parts clay solids) to form coating colors containing 60 percent total solids. The pH of each was ajusted with 10 percent NaOH to about 9.

The resulting alkaline coating colors were then applied via a bench blade coater to a wire side surface of a 39 g/m² European Gravure grade base stock paper. The coated paper was then finished by calendering through four nips at 140°F (60°C) and 400 pli (pounds per linear inch; 71 kg/cm) and the 75° gloss, brightness and Heliotest printability of the resulting finished coated papers were determined by standard methods with the results summarized in Table 4.

TABLE 4

Coating color and coated paper properties

| Parameters | Example number 3 | 4 | Control* #3 |
|---|---|---|---|
| Latex blend | | | |
| Alkali-insoluble latex (AIL)[1] | AIL #1 | AIL #1 | AIL #1 |
| Alkali-soluble latex (ASL)[2] | A | C | C-1 |
| Blend ratio of AIL/ASL (solids wt basis)[3] | 15:1 | 15:1 | 11:1 |
| Polymer Solids in blend (wt%) | 47.7 | 47.8 | 47.6 |
| Coating colors | | | |
| Brookfield Viscosity @ 20 rpm (cps) | 2200 | 4300 | 6000 |
| Brookfield Viscosity @ 100 rpm (cps) | 780 | 1250 | 1740 |
| High shear viscosity (cps) | 29 | 34 | 49 |
| Coated paper properties | | | |
| Coating weight[4] | 7.0 (10.5) | 7.2 (10.8) | 7.2 (10.8) |
| 75° gloss | 59 | 55 | 62 |
| Brightness | 74.8 | 74.8 | 75.2 |
| Heliotest[5] printability @ 40 kg (mm/20 missing dots) | 29 | 30 | 22 |

*Not an example of the invention.
[1]47/50/3 weight ratio styrene/butadiene/itaconic acid.
[2]See Table 1 for the compositions of Latexes A—C.
[3]The AIL/ASL ratio represents the optimum ratio based upon the Black Paper Hiding Test results in Tables 2 and 3.
[4]Pounds/ream (g/m²).
[5]Paper Institute of France; D. I. Lee e.a., Tappi, *58*, 79—83 (1975).

The coated papers of Example 3—4 exhibit better printability than does the comparative coated paper of Control 3 as evidenced by higher Heliotest printability values.

Examples 5—10

A. A series of six alkali-soluble Latexes E—J was prepared by the procedure of Examples 1—2. Each latex was then blended in a ratio of 17.5 parts alkali-insoluble latex to 1 part alkali-soluble latex on a dry polymer basis with the alkali-soluble latex of Examples 1—2. The resulting latex blends were then employed to prepare 60 percent total solids coating colors with Dinkie "A" clay using 5.5 parts total polymer solids per 100 parts clay as in Examples 3—4.

B. The resulting coating colors thus obtained were employed to coat one surface of a 39 g/m² gravure grade paper base stock, then coated as described in Examples 3—4. Additional, comparative latex blends, coating colors and coated papers (Control #4) employing the alkali-soluble Latex C-1 were prepared in the same fashion with a weight ratio of alkali-insoluble polymer to alkali-soluble polymer of 11:1 based on results for Control 1 in Examples 1—2. Typical results are shown in Tables 2, 5 and 6.

TABLE 5
Akali-soluble latex compositions Examples 5—10

| | Alkali-soluble polymer latex | | | | | |
|---|---|---|---|---|---|---|
| Monomers | E | F | G | H | I | J |
| Vinyl Acetate | 63.3 | 73.3 | 73.3 | 63.3 | 68.3 | 83.3 |
| Ethyl Acetate | 26.7 | 16.7 | 16.7 | 26.7 | 21.7 | 6.7 |
| Methacrylic Acid | 10.0 | 10.0 | 10.0 | 10.0 | 10.0 | 10.0 |
| Bromoform | 0.5 | 0.25 | 0.5 | 0.25 | 0.375 | 0.375 |
| Weight % Solids | 27.4 | 28.3 | 29.1 | 28.8 | 28.9 | 28.8 |
| pH | 3.2 | 4.0 | 4.4 | 4.1 | 3.9 | 4.1 |
| 3% Soln. Visc. pH 9 | 12.5 cps | 195 cps | 9.0 cps | 240 cps | 80 cps | 85 cps |
| g 10% NaOH[1] | 4.4 | 4.6 | 4.4 | 4.6 | 4.6 | 4.7 |
| Clarity | tr. haze | lt-mod. haze | tr. haze | lt. haze | tr. haze | mod. haze |

[1]Amount of 10% NaOH required to adjust latex sample containing 9 g of polymer solids to a pH of 9.

TABLE 6
Coating color and coated paper properties

| Example | Alkali soluble latex | Coating color viscosity (Brookfield, cps) 20 rpm | 100 rpm | Coating weight[1] | 75° gloss | Brightness | Heliotest[2] |
|---|---|---|---|---|---|---|---|
| 5 | E | 4200 | 1120 | 7.5 (11.3) | 59 | 74.5 | 71 |
| 6 | F | 6600 | 2000 | 7.5 (11.3) | 51 | 74.2 | 72 |
| 7 | G | 650 | 260 | 7.3 (11.0) | 65 | 74.2 | 55 |
| 8 | H | 6200 | 1800 | 7.6 (11.4) | 51 | 74.2 | 74 |
| 9 | I | 5500 | 1560 | 7.5 (11.3) | 52 | 74.5 | 74 |
| 10 | J | 3300 | 1100 | 7.3 (11.0) | 51 | 74.5 | 72 |
| Control #4* | C-1 | 5000 | 1460 | 7.1 (10.7) | 65 | 75.0 | 56 |

*Not an example of the invention.
[1]Pounds/reams (g/m²).
[2]40 kg values in terms of mm/20 missing dots.

It is apparent that with the exception of Example 7 the paper coating compositions of the invention provide substantially better printability than does the comparative coating color of Control 4. The lower results of Example 7 reflect the low molecular weight of the alkali-soluble polymer (9 cps at 3 percent solids) relative to that of Control 4. Comparison of the same latex on a more comparable molecular weight basis, i.e., Example 6 and Control 4, demonstrates the beneficial printability improvements.

Examples 11—24

A. Another series of 14 alkali-soluble polymers, Latexes K—X were prepared by the procedure of Examples 1—2. Each was then blended with an alkali-insoluble polymer latex comprising at 46.5/49.1/2.6/1.5/0.3 weight ratio copolymer of styrene/butadiene/2-hydroxyethyl acrylate/fumaric acid/acrylic acid in a proportion of 3 parts of alkali-soluble polymer per 100 parts of alkali-insoluble polymer based on polymer solids. Thereafter, the resulting latex blends were employed to prepare coating colors containing 60 weight percent total solids using 5.5 parts of latex based on polymer solids per 100 parts by weight of Dinkie "A" clay in accordance with the procedures of Examples 3—4.

B. The coating colors thus obtained were employed to coat one surface of a 39 $g/m^2$ gravure grade paper base stock as described in Examples 3—4. Comparative alkali-soluble latexes C-2 and C-3 were prepared and evaluated in the same fashion for comparison as Controls 5 and 6. Typical results are shown in Tables 7 and 8.

Examples 25—38

Examples 11—27 were repeated except that the various alkali-soluble polymer latexes and comparative latexes C-2 and C-3 were employed in the blended aqueous polymer dispersion at a level of 10 weight percent based on the alkali-soluble polymer component. In addition, a comparative composition (Control #9) containing no alkali-soluble polymer component was also prepared and evaluated. The evaluation results are summarized in Table 9 below.

TABLE 7
Composition of Latexes K—X and of comparative Latexes C2—C3

| Latex | Monomers[1,2] VA | MAA | EA | Bromoform[1] | 3% Solution visc. @ pH=9[3] |
|---|---|---|---|---|---|
| K | 53 | 7 | 40 | 0 | 20 |
| L | 53 | 7 | 40 | 0.3 | 15 |
| M | 53 | 13 | 34 | 0 | — |
| N | 53 | 13 | 34 | 0.3 | 53 |
| O | 58 | 10 | 32 | 0.15 | 490 |
| P | 63 | 7 | 30 | 0 | 29 |
| Q | 63 | 7 | 30 | 0.3 | 18.5 |
| R | 63 | 13 | 24 | 0 | — |
| S | 63 | 13 | 24 | 0.3 | >500 |
| T | 68 | 10 | 22 | 0.15 | >500 |
| U | 73 | 7 | 20 | 0 | 48 |
| V | 73 | 7 | 20 | 0.3 | 45 |
| W | 73 | 13 | 14 | 0 | — |
| X | 73 | 13 | 14 | 0.3 | >500 |
| C-2 | 25 | 25 | 50 | 0.25 | 70 |
| C-3 | 0 | 25 | 75 | 0 | >500 |

[1]Parts by weight.
[2]VA = Vinyl acetate.
MAA = Methacrylic acid.
EA = Ethyl acrylate.
[3]Brookfield viscosity at 20 rpm.
[4]Latex AA additionally contains 5 parts by weight of acrylamide.

TABLE 8

Coating evaluations at the 3% level of alkali-soluble latex based on the alkali-insoluble latex

| Example No. | Alkali soluble latex | Coating weight[1] | 75° gloss | Brightness | Heliotest printability @ 35 kg[2] |
|---|---|---|---|---|---|
| 11 | K | 7.2 (10.8) | 62 | 74.3 | 30 |
| 12 | L | 6.9 (10.4) | 60 | 74.3 | 32 |
| 13 | M | 7.3 (11.0) | 53 | 74 | 37 |
| 14 | N | 7.1 (10.7) | 57 | 74 | 32 |
| 15 | O | 6.9 (10.4) | 56 | 74.3 | 34 |
| 16 | P | 7.4 (11.1) | 58 | 74.3 | 33 |
| 17 | Q | 7.4 (11.1) | 64 | 72.2 | 34 |
| 18 | R | 7.3 (11.0) | 53 | 74 | 42 |
| 19 | S | 7.4 (11.1) | 53 | 74.3 | 39 |
| 20 | T | 7.3 (11.0) | 60 | 74.3 | 34 |
| 21 | U | 7.3 (11.0) | 57 | 74.2 | 33 |
| 22 | V | 7.1 (10.7) | 58 | 74.3 | 34 |
| 23 | W | 7.2 (10.8) | 56 | 74.4 | 36 |
| 24 | X | 6.9 (10.4) | 56 | 74.3 | 31 |
| C-5* | C-2 | 6.9 (10.4) | 67 | 74.3 | 23 |
| C-6* | C-3 | 6.9 (10.4) | 65 | 74.3 | 23 |

*Not an example of the invention.
[1]Pounds per ream (g/m²).
[2]Millimeters to 20 missing dots.

TABLE 9
Coating evaluations at the 10% level of alkali-soluble latex based on the alkali-insoluble latex

| Example No. | Alkali soluble latex | Coating weight[1] | 75° gloss | Brightness | Heliotest printability @ 35 kg[2] |
|---|---|---|---|---|---|
| 25 | K | 6.8 (10.2) | 59 | 74.4 | 31 |
| 26 | L | 7.2 (10.8) | 60 | 74 | 34 |
| 27 | M | 7.0 (10.5) | 58 | 74 | 30 |
| 28 | N | 6.8 (10.2) | 63 | 74 | 28 |
| 29 | O | 7.0 (10.5) | 57 | 74.4 | 29 |
| 30 | P | 7.0 (10.5) | 59 | 74 | 33 |
| 31 | Q | 6.8 (10.2) | 61 | 74 | 30 |
| 32 | R | 6.8 (10.2) | 58 | 74 | 34 |
| 33 | S | 6.9 (10.4) | 62 | 74.6 | 29 |
| 34 | T | 6.8 (10.2) | 56 | 74.6 | 31 |
| 35 | U | 7.0 (10.5) | 57 | 74.4 | 40 |
| 36 | V | 7.0 (10.5) | 58 | 74 | 36 |
| 37 | W | 7.0 (10.5) | 52 | 74 | 41 |
| 38 | X | 7.0 (10.5) | 56 | 74.6 | 36 |
| C-7* | C-2 | 7.1 (10.7) | 63 | 74.6 | 22 |
| C-8* | C-3 | 7.1 (10.7) | 63 | 74.7 | 20 |
| C-9* | None | 7.0 (10.5) | 63 | 73.3 | 20 |

*Not an example of the invention.
[1]Pounds per ream ($g/m^2$).
[2]Millimeters to 20 missing dots.

Coating compositions employing the improved aqueous polymer dispersions of the foregoing examples provide notably better Heliotest printability than do the comparative control compositions. This is particularly so when the alkali-soluble polymer component (B) is employed at a 10 percent level based on alkali-insoluble latex (A) and when the alkali-soluble polymer component (B) contains more than 40 weight percent vinyl acetate.

**Claims**

1. An aqueous polymer dispersion containing:
(A) from 10 to 60 weight percent based upon the total dispersion weight of an alkali-insoluble polymer having a glass transition temperature of not more than 50°C, said alkali-insoluble polymer being a synthetic addition polymer comprising in polymerised form, and based upon the weight of alkali-insoluble polymer
(1) from 30 to 75 percent of a monovinylidene aromatic monomer,
(2) at least 25 percent of an aliphatic conjugated diene to make up 100 percent total with (1) and (3) and
(3) from 1 to 10 percent itaconic acid, fumaric acid or maleic acid, and
(B) from 0.5 to 25 weight percent based upon the alkali-insoluble polymer (A) of an alkali-soluble synthetic addition polymer comprising in polymerised form based upon the weight of alkali-soluble polymer

(1) from 50 to 85 percent of a vinyl ester of a non-addition polymerisable carboxylic acid,

(2) from 5 to 45 percent of the nitrile or $C_1$—$C_8$ alkyl ester of a monoethylenically unsaturated carboxylic acid, and

(3) from 5 to 13 percent of a monoethylenically unsaturated carboxylic acid.

2. The aqueous polymer dispersion of Claim 1 where the vinyl ester component of the alkali-soluble polymer (B) constitutes from 60 to 85 weight percent of the alkali-soluble polymer.

3. The aqueous polymer dispersion of Claim 1 where the monoethylenically unsaturated carboxylic acid component of the alkali-soluble polymer constitutes from 7 to 13 weight percent of the alkali-soluble polymer.

4. The aqueous polymer dispersion of Claim 1 where the vinyl ester component of the alkali-soluble polymer is vinyl acetate.

5. The aqueous polymer dispersion of Claim 1 where the component (B2) is a $C_2$—$C_8$ alkyl ester of acrylic or methacrylic acid.

6. The aqueous polymer dispersion of Claim 1 where the alkali-insoluble polymer component (A) is a copolymer of

(1) 30 to 70 weight percent styrene,

(2) at least 25 weight percent 1,3-butadiene to make up 100 percent with (1) and (3) and

(3) 1 to 5 weight percent itaconic, fumaric or maleic acid,

and the alkali-soluble polymer component (B) is the copolymer of:

(1) 50 to 85 weight percent vinyl acetate,

(2) 5 to 45 weight percent of ethyl acrylate and

(3) 5 to 13 weight percent methacrylic acid having a 3 weight percent aqueous solution Brookfield viscosity of 0.01 to 12.0 Pa.S (10 to 1200 cps) at pH 9.20 rpm and 25°C.

7. An aqueous coating composition comprising a pigment and 3 to 30 parts per 100 parts pigment, all on a dry weight basis of the aqueous polymeric dispersion of Claim 1 as a binder.

**Patentansprüche**

1. Wässrige Polymerdispersion enthaltend:

(A) 10 bis 60 Gew.-% bezogen auf Gesamtgewicht der Dispersion eines alkali-unlöslichen Polymeren mit einer Glasübergangstemperatur von nicht mehr als 50°C, wobei das alkali-unlösliche Polymere ein synthetisches Additonspolymeres ist und in polymerisierter Form bezogen auf das Gewicht des alkali-unlöslichen Polymeren enthält

(1) 30 bis 75% eines monovinylidenaromatischen Monomeren,

(2) mindestens 25% eines aliphatischen konjugierten Diens, um bis zu 100% Gesamtmenge mit (1) und (3) zu ergegen, und

(3) 1 bis 10% Itakonsäre, Fumarsäure oder Maleinsäure und

(B) 0,5 bis 25 Gew.-% bezogen auf das alkali-unlösliche Polymere (A) eines alkali-löslichen synthetischen Additionspolymeren, das in polymerisierter Form bezogen auf das Gewicht des alkali-löslichen Polymeren enthält

(1) 50 bis 85% eines Vinylesters einer nicht durch Addition polymerisierbaren Carbonsäure,

(2) 5 bis 45% des Nitrils oder $C_1$—$C_8$ Alkylesters einer monoethylenisch ungesattigten Carbonsäure und

(3) 5 bis 13% einer monoethylenisch ungesättigten Carbonsäure.

2. Wässrige Polymerdispersion nach Anspruch 1, dadurch gekennzeichnet, daß die Vinylesterkomponente des alkali-löslichen Polymeren (B) 60 bis 85 Gew.-% des alkali-löslichen Polymeren ausmacht.

3. Wässrige Polymerdispersion nach Anspruch 1, dadurch gekennzeichnet, daß die monoethylenisch ungesättigte Carbonsäurekomponente des alkali-löslichen Polymeren 7 bis 13 Gew.-% des alkali-löslichen Polymeren ausmacht.

4. Wässrige Polymerdispersion nach Anspruch 1, dadurch gekennzeichnet, daß die Vinylesterkomponente des alkali-löslichen Polymeren Vinylacetat ist.

5. Wässrige Polymerdispersion nach Anspruch 1, dadurch gekennzeichnet, daß die Komponente (B2) ein $C_1$—$C_8$ Alkylester der Acrylsäure oder Methacrylsäure ist.

6. Wässrige Polymerdispersion nach Anspruch 1, dadurch gekennzeichnet, daß die Alkali-unlösliche Polymerkomponente (A) ein Copolymeres ist von

(1) 30 bis 70 Gew.-% Styrol,

(2) mindestens 25 Gew.-% 1,3-Butadien, um 100% mit (1) und (3) zu ergeben, und

(3) 1 bis 5 Gew.-% Itaconsäure, Fumarsäure oder Maleinsäure,

und die Alkali-lösliche Polymerkomponente (B) eine Copolymer ist von

(1) 50 bis 85 Gew.-% Vinylacetat,

(2) 5 bis 45 Gew.-% Ethylacrylat und

(3) 5 bis 13 Gew.-% Methacrylsäure

und in 3 Gew-% wässriger Lösung eine Brookfield Viskosität von 0,01 bis 12,0 Pa.s. (10 bis 1200 cps) bei pH 9, 20 Upm und 25°C hat.

7. Wässrige Überzugsmasse enthaltend ein Pigment und 3 bis 30 Teile pro 100 Teile Pigment der wässrigen Polymerdispersion von Anspruch 1 als Binder, wobei alle Teile auf Basis des Trockengewichts angegeben sind.

**Revendications**

1. Dispersion aqueuse de polymères contenant:

(A) de 10 à 60 pour cent en poids, par rapport au poids total de la dispersion, d'un polymère insoluble dans les produits alcalins, ayant un température de transition vitreuse ne dépassant pas 50°C, ledit polymère insoluble dans le produits alcalins étant un polymère synthétique d'addition, comportant, sous forme polymérisée et par rapport au poids du polymère insoluble dans les produits alcalins,

(1) de 30 à 75% d'un monomère monovinylidènearomatique,

(2) au moins 25% d'un diène aliphatique conjugué, de façon que cela fasse un total de 100% avec (1) et (3),

(3) de 1 à 10% d'acide itaconique, d'acide fumarique ou d'acide maléique, et

(B) de 0,5 à 25 pour cent en poids, par rapport au polymère (A) insoluble dans les produits alcalins, d'un polymère d'addition synthétique soluble dans les produits alcalins comprenant, sous forme polymérisée, par rapport au poids de polymère soluble dans les produits alcalins,

(1) de 50 à 85 pour cent d'un ester vinylique d'un acide carboxylique non polymérisable par addition;

(2) de 5 à 45 pour cent du nitrile, ou d'un ester alkylique en $C_1$—$C_8$ d'un acid carboxylique monoéthyléniquement insaturé, et

(3) de 5 à 15 pour cent d'un acide carboxylique monoéthylènique insaturé.

2. Dispersion aqueuse de polymères selon la revendication 1, où l'éster vinylique constituant du polymère (B) soluble dans les produits alcalins constitue de 60 à 85 pour cent en poids du polymère soluble dans les produits alcalins.

3. Dispersion aqueuse de polymères selon la revendication 1, où l'acide carboxylique monoéthylèniquement insaturé constituant du polymère soluble dans les produits alcalins constitue de 7 à 13 pour cent en poids du polymère soluble dans les produits alcalins.

4. Dispersion aqueuse de polymères selon la revendication 1, où l'ester vinylique constituant du polymère soluble dans les produits alcalins est l'acétate de vinyle.

5. Dispersion aqueuse de polymères selon la revendication 1, où le constituant (B2) est un ester alcoylique en $C_1$—$C_8$ de l'acide acrylique ou méthacrylique.

6. Dispersion aqueuse de polymères selon la revendication 1, où le constituant polymère (A) insoluble dans les produits alcalins est un copolymère de:

(1) 30 à 70 pour cent en poids de styrène,

(2) au moins 25 pour cent en poids, de façon que cela fasse un total de 100% avec (1) et (3), de 1,3-butadiène, et

(3) 1 à 5 pour cent en poids d'acide itaconique, fumarique ou maléique,

et le constitutant polymère (B) soluble dans les produits alcalins est un copolymère de:

(1) 50 à 85 pour cent en poids d'acétate de vinyle;

(2) 5 à 45 pour cent en poids d'acrylate d'éthyle, et

(3) 5 à 13 pour cent en poids d'acide méthacrylique ayant une viscosité Brookfield, pour une solution aqueuse à 3 pour cent en poids, de 0, 01 à 12,0 Pa.s (10 à 1200 cps) à pH 9, 20 tours/minute et 25°C.

7. Composition aqueuse de couchage comprenant un pigment et 3 à 30 parties pour 100 parties de pigment, le tout calculé en poids, de la dispersion aqueuse de polymères de la revendication 1 comme liant.